# EUROPEAN PATENT SPECIFICATION

(11) **EP 0 625 994 B1**
(45) Date of publication and mention of the grant of the patent: **08.04.1998**
(21) Application number: 93903673.7
(22) Date of filing: 25.01.1993
(51) Int. Cl.: C08F 6/10, C08F 6/16

(54) **PURIFICATION OF VINYL LACTAM POLYMERS**
REINIGUNG VON VINYLLAKTAMPOLYMEREN
PURIFICATION DE POLYMERES DE LACTAME VINYLIQUE

(30) Priority: 10.02.1992 US 833204; 14.02.1992 US 834968
(43) Date of publication of application: 30.11.1994
(73) Proprietor: ISP INVESTMENTS INC., Wilmington, Delaware 19801 (US)
(72) Inventor: TSENG, Susan, Y., Staten Island, NY 10306 (US); MANDELLA, William, L., Boonton, NJ 07005 (US); SMITH, Terry, E., Murray, KY 42071 (US); LOGIN, Robert, B., Oakland, NJ 07436 (US); TAYLOR, Paul, D., West Milford, NJ 07489 (US)
(74) Representative: Ford, Michael Frederick
(86) International application number: US9300652
(87) International publication number: WO9316114

(56) References cited:
- EP-A- 0 461 948
- CH-A- 468 832
- US-A- 2 810 714
- US-A- 2 914 516
- US-A- 3 017 393
- US-A- 3 072 615
- US-A- 3 701 764
- US-A- 3 944 513
- US-A- 4 187 370
- US-A- 4 795 802

## Description

This invention relates to processes using activated carbon for the purification of polyvinylpyrrolidone or polyvinylcaprolactan, from residual monomer.

In US-A-4 795 802, Example 5, activated carbon is suspended in a polyvinylpyrrolidone for 6 hours. The vinylpyrrolidone monomer content was reduced to 23 ppm.

In the present invention, a continuous, liquid phase process produces purified polyvinylpyrrolidone (PVP) having a residual vinylpyrrolidone (VP) level of < 1 ppm and comprises:
(a) continuously passing an aqueous solution of crude PVP at a concentration of 20-40%, and having a Fitkenscher K-value of 10-90, through a stationary bed of granular activated carbon, at a temperature of 20-90°C.;
(b) retaining the solution in contact with the activated carbon for a residence time of at least 50 minutes;
(c) collecting the purified PVP solution with at least a throughput of 10 g crude PVP (100% basis)/g Carbon used, and
(d) separating the purified PVP product from the water.

The crude PVP solutions to be treated usually contain PVP having a K-value (Fitkenscher) of 10-90; however, a K-value in the range of 15-60 is preferred because higher K-values may be too viscous to provide suitable concentrated aqueous solutions for commercial use. The most preferred K-values are 15 to 30.

Similarly, the upper limit on the concentration of the crude aqueous PVP solution is determined by the viscosity of the solution. For example, a concentration of about 30-40% by weight is suitable for K-values of PVP of 15-60, while a concentration of about 20-30% is preferred for a K-90 PVP.

The process is run at a temperature of about 20-90°C., preferably about 30-50°C.

The granular activated carbon used herein suitably has a mesh size between about 20 x 50 mesh (small particle size) to about 4 x 15 mesh (larger particle size). Typical of the activated carbons suitable for use in the invention are those available from the Calgon Carbon Corp. The Calgon products designated as types PCB and CPG Granular are considered most effective in the process of the invention. PCB-Granular of 12 x 30 mesh is a particularly preferred activated carbon.

The bed weight of the granular activated carbon used in the packed stationary column is predetermined by the volume of the column itself. In accordance with this invention, the efficiency of the process is established by the amount of crude PVP which can be purified to a residual level of VP of < 1 ppm for a given bed weight of the granular activated carbon used. A feature of this invention is that such efficiency (or throughput) is at least 10 g of crude PVP (100% basis)/g Carbon used, preferably, at least 25 g PVP/g Carbon, and, most preferably, at least about 50-60 g PVP/g Carbon.

The invention will now be described with reference to the following laboratory and plant runs.

### EXAMPLES 1-11

### LABORATORY RUNS

A jacketed glass column having an internal diameter of 2.5 cm and a height of 111.8 cm was packed with 278 g. of pelleted, activated carbon (Calgon Carbon Corp., CPG-LF Granular 12 x 40 Mesh) and maintained at 40°C. Then an aqueous solution of crude polyvinylpyrrolidone (K-15, 29.1% solids), having a residual vinylpyrrolidone content of 259 ppm, was passed through the packed column in a downward direction at a flow rate of 5-6 ml of solution/min. The purified solution was collected in several fractions and analyzed for residual vinylpyrrolidone content. The results of these runs are given in Tables 1 and 3 below.

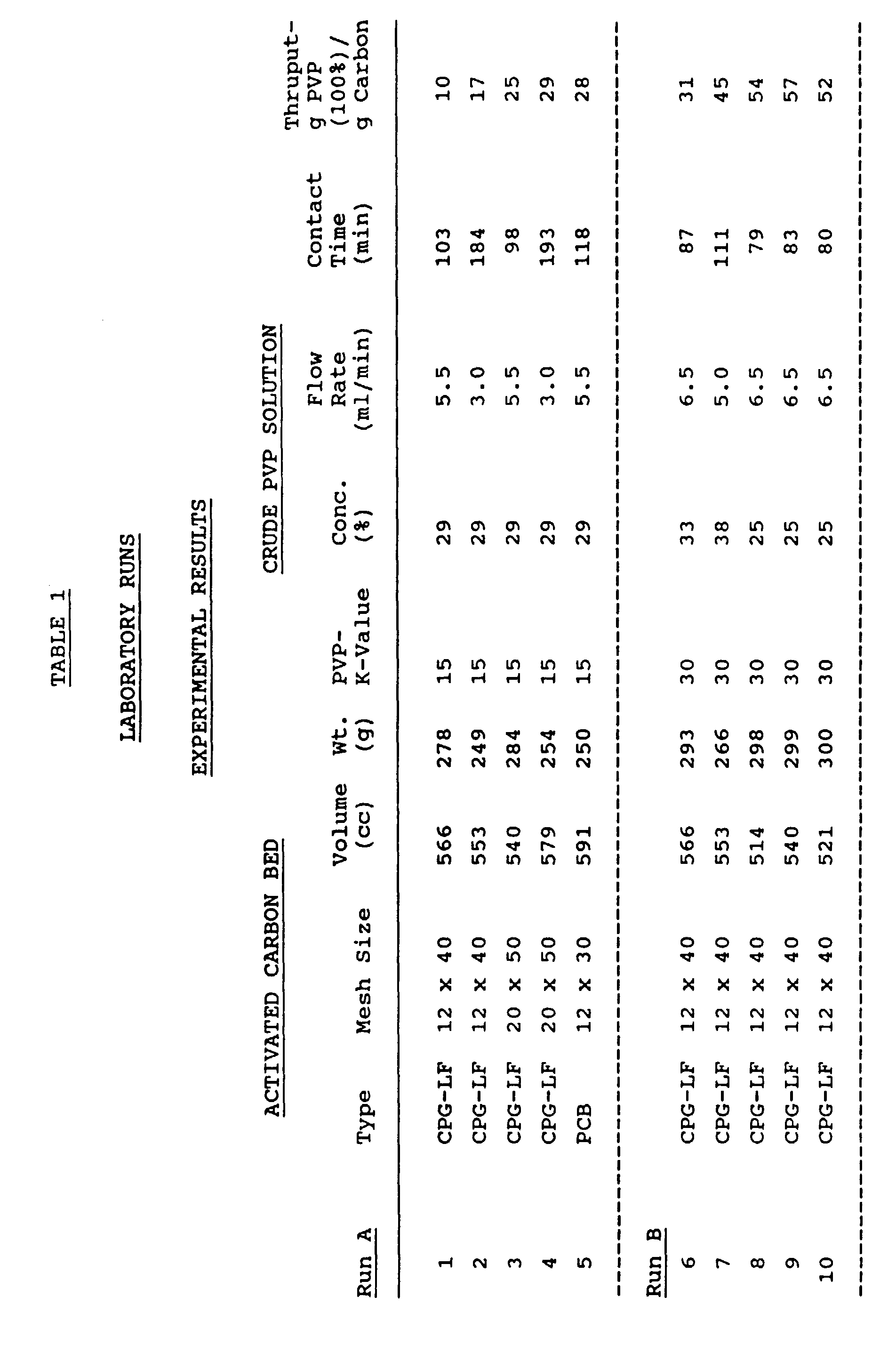

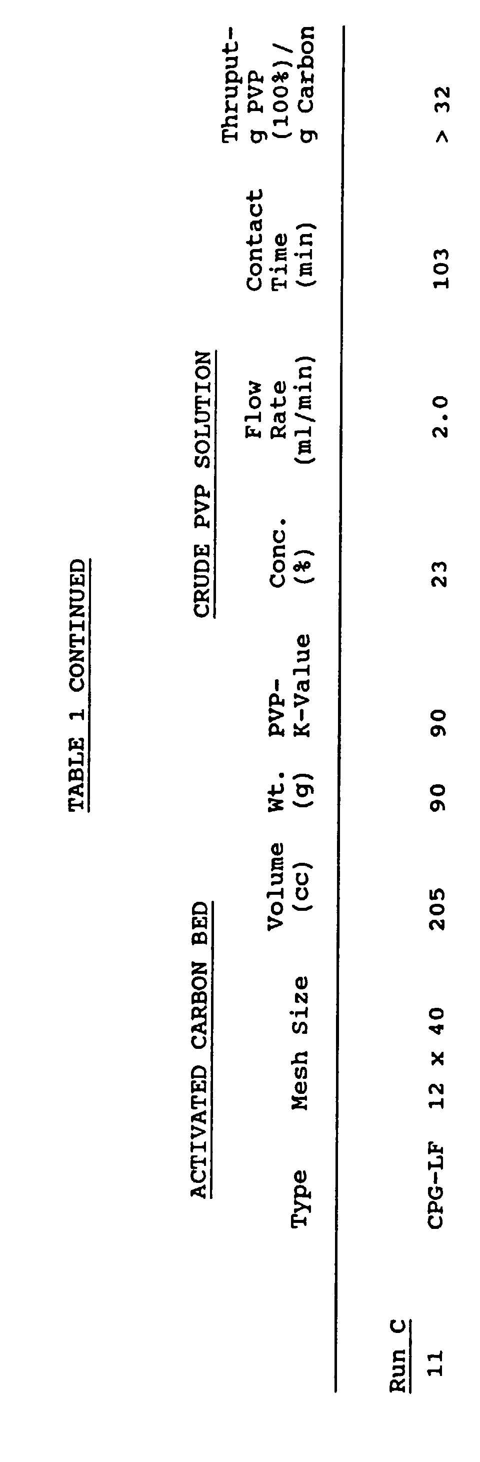

In large scale runs, the column was a 2.83 m³ (100 ft³) stainless steel vessel filled with about 1185 kg (2600 lbs), of Calgon CPG LF 12 x 40 mesh size activated carbon. Crude PVP solutions having K-values of about 30 at a concentration of about 33-34% solids were pumped through the stationary carbon bed at a flow rate of 15-19 l/min (4-5 gal/min). The purified PVP solution was collected and the water was separated. The results are given in Tables 2 and 4 below.

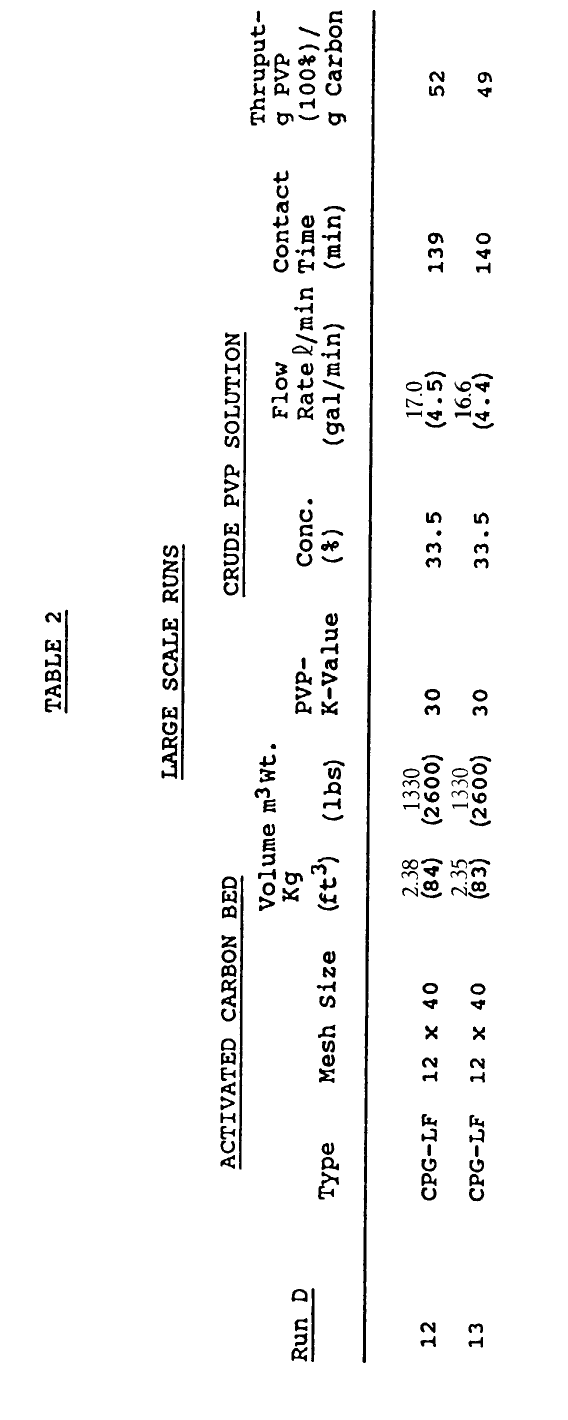

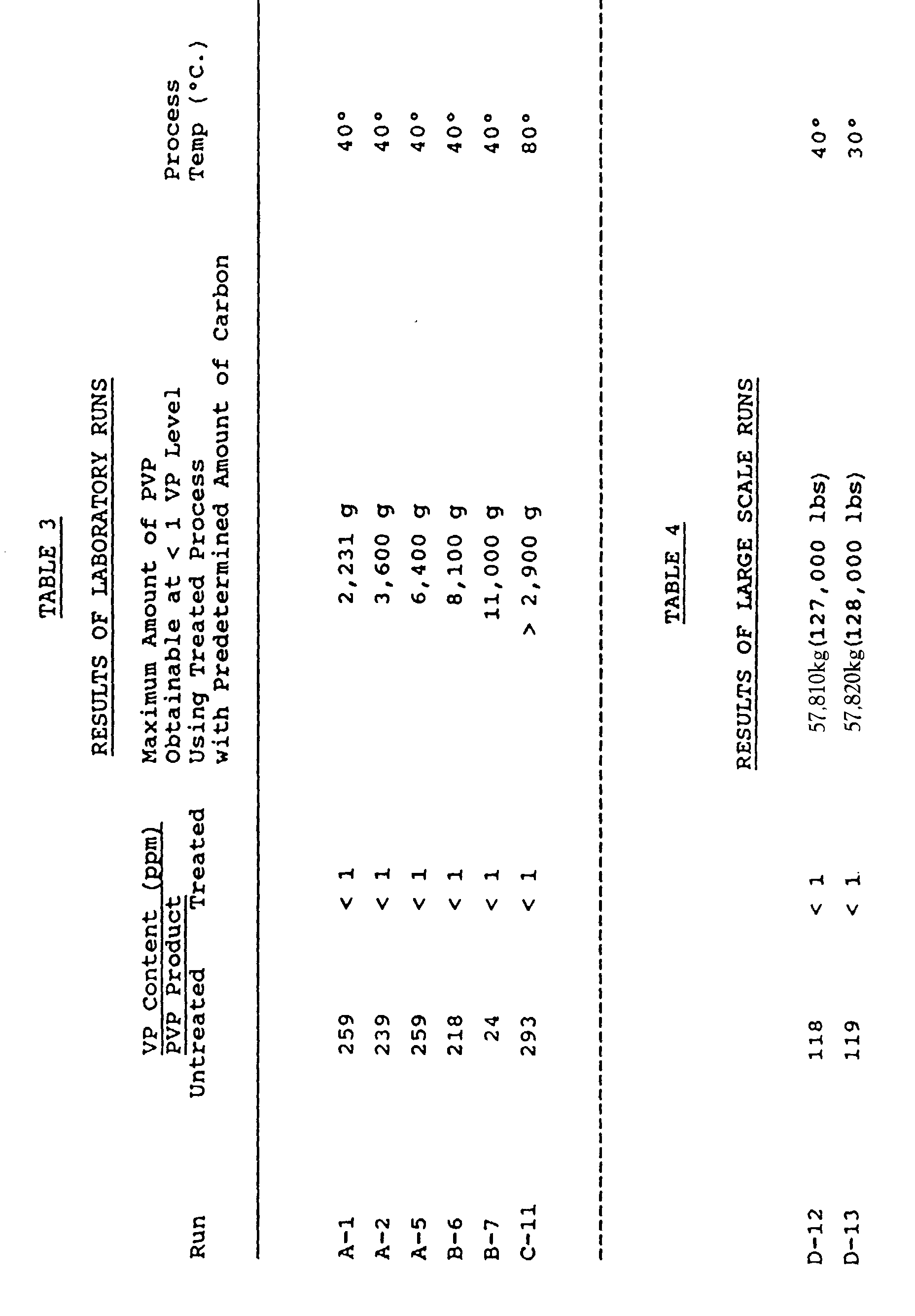

## Claims

1. A continuous process for the purification of polyvinylpyrrolidone (PVP) or polyvinylcaprolactam (PVCL), with a throughput of at least 10 g crude PVP or PVCL (100% basis)/g Carbon used, and to reduce the residual vinylpyrrolidone or vinyl lactam level therein to less than 1 ppm, comprising:
(a) continuously passing an aqueous solution of crude PVP or PVCL at a concentration of 20-40%, and having a K-value of 10-90 through a stationary bed of granular activated carbon at a temperature of 20-90°C,
(b) retaining the solution in contact with the activated carbon for a residence time of at least 50 minutes,
(c) collecting the purified solution and
(d) separating the purified PVP or PVCL from the water.

2. A continuous process according to claim 1 wherein, in (a), a concentration of 30-40% PVP solution is used for K-values of PVP of 15-60.

3. A continuous process according to claim 1 wherein, in (a), a concentration of 20-30% PVP solution is used for a K-90 PVP.

4. A continuous process according to claim 1 wherein, in (a), the K-value of the crude PVP or PVCL is 15-30.

5. A continuous process according to any one of the preceding claims wherein, in (b), the residence time is 70-400 minutes.

6. A continuous process according to any one of the preceding claims wherein the throughput is 25-60 g crude PVP or PVCL per g Carbon.

## Patentansprüche

1. Kontinuierliches Verfahren zur Reinigung von Polyvinylpyrrolidon (PVP) oder Polyvinylcaprolactam (PVCL) mit einem Durchsatz von zumindest 10 g rohem PVP oder PVCL (100%-Basis) pro g eingesetztem Kohlenstoff und zum Herabsetzen der darin enthaltenen Restmenge an Vinylpyrrolidon oder Vinyllactam auf weniger als 1 ppm, umfassend:
(a) das kontinuierliche Hindurchleiten einer wäßrigen Lösung von rohem PVP oder PVCL mit einer Konzentration von 20-40% und einem K-Wert von 10-90 durch ein Festbett aus granulierter Aktivkohle bei einer Temperatur von 20-90°C,
(b) das In-Kontakt-Halten der Lösung mit der Aktivkohle über eine Verweilzeit von zumindest 50 min,
(c) das Sammeln der gereinigten Lösung und
(d) das Abtrennen des gereinigten PVP oder PVCL vom Wasser.

2. Kontinuierliches Verfahren nach Anspruch 1, worin in Schritt (a) bei K-Werten für PVP von 15-60 eine PVP-Lösung mit einer Konzentration von 30-40% eingesetzt wird.

3. Kontinuierliches Verfahren nach Anspruch 1, worin in Schritt (a) bei einem K-Wert für PVP von 90 eine PVP-Lösung mit einer Konzentration von 20-30% eingesetzt wird.

4. Kontinuierliches Verfahren nach Anspruch 1, worin in Schritt (a) der K-Wert des rohen PVP oder PVCL 15-30 beträgt.

5. Kontinuierliches Verfahren nach einem der vorangegangenen Ansprüche, worin in Schritt (b) die Verweilzeit 70-400 min beträgt.

6. Kontinuierliches Verfahren nach einem der vorangegangenen Ansprüche, worin der Durchsatz 25-60 g rohes PVP oder PVCL pro g Kohlenstoff beträgt.

## Revendications

1. Procédé continu pour la purification de polyvinylpyrrolydone (PVP) ou de polyvinylcaprolactame (PVCL), avec un débit d'au moins 10 g de PVP ou de PVCLC brut (base 100 %/)g de Carbone utilisé, et pour réduire le niveau de vinylpyrrolidone ou de vinyl lactame résiduel à moins de 1 ppm, comprenant :
(a) le passage continu d'une solution aqueuse de PVP ou PVCL brut à une concentration de 20-40 % et ayant une valeur de K de 10-90 à travers un lit stationnaire de carbone activé granulaire à une température de 20-90°C,
(b) la retenue de solution en contact avec le carbone activé pendant un temps de résidence d'au moins 50 minutes,
(c) la collecte de la solution purifiée et
(d) la séparation de PVP ou PVCL purifié de l'eau

2. Procédé continu selon la revendication 1, où, en (a), une concentration de 30-40 % de la solution de PVP est utilisée pour des valeurs de K de PVP de 15-60.

3. Procédé continu selon la revendication 1 où, en (a), une concentration de 20-30 % de la solution de PVP est utilisée pour une PVP à K-90.

4. Procédé continu selon la revendication 1 où, en (a), la valeur de K de PVP ou PVCL brut est de 15-30.

5. Procédé continu selon l'une quelconque des revendications précédentes où, en (b), le temps de résidence est de 70-400 minutes.

6. Procédé continu selon l'une quelconque des revendications précédentes où le débit est de 25-60 g de PVP ou PVCL brut par g de Carbone.
